(19) **Europäisches Patentamt**
**European Patent Office**
**Office européen des brevets**

(11) **EP 4 580 084 A1**

(12) **EUROPEAN PATENT APPLICATION**
published in accordance with Art. 153(4) EPC

(43) Date of publication:
**02.07.2025 Bulletin 2025/27**

(21) Application number: **22958983.3**

(22) Date of filing: **19.09.2022**

(51) International Patent Classification (IPC):
***H04B 7/145*** (2006.01)

(52) Cooperative Patent Classification (CPC):
**H04B 7/145**

(86) International application number:
**PCT/CN2022/119624**

(87) International publication number:
**WO 2024/059969 (28.03.2024 Gazette 2024/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **XI, Xiaojun
Shenzhen, Guangdong 518129 (CN)**
• **BI, Xiaoyan
Shenzhen, Guangdong 518129 (CN)**
• **LIU, Yong
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **CHANNEL ESTIMATION METHOD, APPARATUS AND SYSTEM**

(57)     This application relates to a channel estimation method, an apparatus, and a system. A terminal device sends $T_1$ reference signals, where the $T_1$ reference signals are reflected to a network device through a RIS, $T_1$ is a positive integer less than M, and M is a quantity of unit cells included in the RIS. The terminal device receives first information from the network device, where the first information indicates a value of $T_2$, and $T_2$ is a positive integer less than M. The terminal device sends $T_2$ reference signals, where the $T_2$ reference signals are reflected to the network device through the RIS, the $T_2$ reference signals are used to estimate a cascaded channel, and the cascaded channel includes a channel between the network device and the RIS and a channel between the RIS and the terminal device. According to the technical solutions in embodiments of this application, transmission overheads of the reference signal can be reduced.

FIG. 3

**Description**

TECHNICAL FIELD

This application relates to the field of communication technologies, and in particular, to a channel estimation method, an apparatus, and a system.

BACKGROUND

A reconfigurable intelligent surface (reconfigurable intelligent meta-surface, RIS) assisted network that controls a channel feature through a RIS is considered as a key enabling technology to expand coverage of a wireless communication network. The RIS can be mounted on a large plane (such as an indoor wall or ceiling, or an outdoor building or sign) to reflect radio frequency (radio frequency, RF) energy around an obstacle and create a virtual line-of-sight (line of sight, LoS) propagation path between a communication source and a target.

In an example in which two parties of communication are a base station and a user equipment (user equipment, UE) respectively, a RIS channel may include a channel between the base station and the RIS and a channel between the RIS and the UE. The RIS channel is estimated, so that the base station can perform processing such as downlink precoding. The RIS includes a plurality of unit cells. To estimate the RIS channel, a quantity of reference signals sent by the UE needs to be greater than or equal to a quantity of unit cells included in the RIS. However, the RIS usually includes a large quantity of unit cells, for example, thousands of unit cells. As a result, it can be learned that overheads of the reference signal that are caused by estimating the RIS channel are large.

SUMMARY

Embodiments of this application provide a channel estimation method, an apparatus, and a system, to reduce overheads of a reference signal when a RIS channel is estimated.

According to a first aspect, a first channel estimation method is provided. The method may be performed by a terminal device, may be performed by another device including a function of a terminal device, or performed by a chip system (or a chip) or another functional module. The chip system or the functional module can implement the corresponding function of the terminal device. For example, the chip system or the functional module is disposed in the terminal device. The method includes: sending $T_1$ reference signals, where the $T_1$ reference signals are reflected to a network device through a RIS, $T_1$ is a positive integer less than M, and M is a quantity of unit cells included in the RIS; receiving first information from the network device, where the first information indicates a value of $T_2$, and $T_2$ is a positive integer less than M; and sending $T_2$ reference signals, where the $T_2$ reference signals are reflected to the network device through the RIS, the $T_2$ reference signals are used to estimate a cascaded channel, and the cascaded channel includes a channel between the network device and the RIS and a channel between the RIS and the terminal device.

In this embodiment of this application, the terminal device may send reference signals in two rounds. In a first round, the $T_1$ reference signals are sent. $T_1$ is less than the total quantity M of unit cells included in the RIS. In a second round, the $T_2$ reference signals are sent. $T_2$ is a value indicated by the network device, and $T_2$ is also less than M. For example, a sum of $T_1$ and $T_2$ is also less than M. It can be learned that a quantity of reference signals sent by the terminal device is far less than the total quantity of unit cells included in the RIS. Therefore, overheads of the reference signal are reduced.

In an optional implementation, a value of $T_1$ is predefined; a value of N is predefined; or the method further includes: receiving second information from the network device, where the second information indicates a value of $T_1$ or indicates a value of N, N is a quantity of unit cells included in a first subarray of the RIS, the first subarray is used to reflect the $T_1$ reference signals, and $T_1$ is a positive integer greater than or equal to N. For example, if the value of $T_1$ is protocol-predefined, the terminal device may directly determine the value of $T_1$, and the network device does not need to indicate the value, so that signaling overheads can be reduced. Alternatively, for example, if the value of N is protocol-predefined, the terminal device only needs to set $T_1$ to be greater than or equal to N. Therefore, the value of $T_1$ can also be determined, and the network device does not need to indicate the value. Alternatively, the value of $T_1$ may be determined and indicated by the network device, and the value of $T_1$ may be flexible.

According to a second aspect, a second channel estimation method is provided. The method may be performed by a network device, may be performed by another device including a function of a network device, or performed by a chip system (or a chip) or another functional module. The chip system or the functional module can implement the corresponding function of the network device. For example, the chip system or the functional module is disposed in the network device. The method includes: receiving $T_1$ reference signals that are from a terminal device and that are reflected by a first subarray of a RIS, where the RIS includes M unit cells, the first subarray includes N unit cells in the M unit cells, M is a positive integer, N is a positive integer less than M, and $T_1$ is a positive integer greater than or equal to N and less than M; estimating a path of an angular domain of a cascaded channel based on the $T_1$ reference signals, and determining a first codebook based on the path of the angular domain, where the first codebook includes at least one weight, the at least one weight is weights of E unit cells in the M unit cells, the cascaded channel includes a channel between the network device and the RIS and a channel between the RIS and the terminal device, and E is a positive integer less than or equal to M; sending third information to the RIS, where the third information indicates the first codebook, and the first codebook is used by the RIS to reflect a reference signal; receiving $T_2$ reference signals that are from the terminal device and that are reflected by the E unit cells, where the $T_2$ reference signals are processed based on the first codebook, and $T_2$ is a positive integer greater than or equal to the path of the angular domain and less than M; and estimating the cascaded channel based on the $T_2$ reference signals. For technical effects brought by the method, refer to the descriptions of the technical effects of the first aspect.

In an optional implementation, the first codebook meets the following relationship: $W_{Dr} = (D_{r_{new}}(:, L) \times D_r(:, L)^{-1})^H$, where $W_{Dr}$ represents the first codebook, $D_{r_{new}}$ represents a new dictionary matrix that is of the angular domain and that is obtained based on the first codebook, $D_r$ represents an original dictionary matrix of the angular domain, L represents the path of the angular domain, $X^H$ represents a conjugate transpose matrix of a matrix X, and $D(:, L)$ represents taking L column vectors of a matrix D. A structure of the dictionary matrix of the angular domain and a structure of a DFT matrix are similar, and each column of the dictionary matrix is orthogonal to each other. Therefore, if a new matrix obtained through weighting is still a dictionary matrix, it can be ensured that the new matrix is still orthogonal to the path of the angular domain. In this embodiment of this application, $D_{r_{new}}$ represents the new dictionary matrix that is of the angular domain and that is obtained based on the first codebook. In other words, after the unit cells of the RIS are weighted based on the weight included in the first codebook, the obtained new matrix is still a dictionary matrix. Therefore, orthogonality between the new dictionary matrix and the path of the angular domain can be ensured, and accuracy of channel estimation can be improved.

In an optional implementation, a dimension of $D_{r_{new}}$ is $T_2 \times R$, and R represents a resolution of the angular domain.

In an optional implementation, the first subarray is a linear array, and a dimension of $D_r$ is $N \times R$; or the first subarray is a planar array, and $D_r = D_{rH} \otimes D_{rV}$, where $D_{rH}$ represents a row matrix, $D_{rV}$ represents a column matrix, a dimension of $D_{rH}$ is $p \times R$, a dimension of $D_{rV}$ is $q \times R$, a dimension of the first subarray is $p \times q$, and $a \otimes b$ represents solving for a Kronecker product of a and b, and R represents the resolution of the angular domain. $D_r$ may be used to weight the first subarray, and therefore a dimension of $D_r$ may vary with the first subarray.

In an optional implementation, the sending third information to the RIS includes: sending the first codebook to the RIS; or sending an index of the path of the angular domain in the original dictionary matrix of the angular domain to the RIS. The network device may directly send the first codebook to the RIS, and the RIS can obtain the first codebook without performing another processing, so that implementation of the RIS can be simplified. Alternatively, the network device may send the index of the path of the angular domain to the RIS, and the RIS may obtain the first codebook based on the index. Compared with the first codebook, the index of the path of the angular domain has a smaller amount of information, so that the signaling overheads can be reduced.

In an optional implementation, the estimating a path of an angular domain of a cascaded channel based on the $T_1$ reference signals includes: estimating the path of the angular domain based on the $T_1$ reference signals by using a compressed sensing algorithm, a statistical algorithm, or the like. A used algorithm is not limited in embodiments of this application.

In an optional implementation, the method further includes: sending fourth information to the RIS, where the fourth information includes one or more of the following: a value of N, a quantity of rows of the N unit cells, or a quantity of columns of the N unit cells. For example, the first subarray is determined by the network device. In this case, the network device may send a related parameter of the first subarray to the RIS, so that the RIS can determine the first subarray based on the related parameter. Alternatively, the first subarray may be determined by another device. In this case, the another device may send the parameter of the first subarray to the RIS, or optionally, may send the parameter of the first subarray to the network device. Alternatively, the first subarray may be determined by the RIS. In this case, the RIS may send the fourth information to the network device, to indicate the parameter of the first subarray.

In an optional implementation, the N unit cells are continuous unit cells. The N unit cells may be continuously distributed unit cells, so that a calculation process of estimating the path of the angular domain by the network device can be simplified.

According to a third aspect, a third channel estimation method is provided. The method may be performed by a RIS or a component (for example, a RIS apparatus) in the RIS. For example, the component includes at least one of a processor, a transceiver, a processing unit, or a transceiver unit. For example, an execution body is the RIS. The method may include: sending $T_1$ reference signals that are reflected by a first subarray of the RIS to a network device, where the RIS includes M unit cells, the first subarray includes N unit cells in the M unit cells, M is a positive integer, N is a positive integer less than M, and $T_1$ is a positive integer greater than or equal to N and less than M; receiving third information from the network device, where the third information indicates a first codebook, the first codebook includes at least one weight, the at least one weight is weights of E unit cells in the M unit cells, the first codebook is determined based on the $T_1$

reference signals, and E is a positive integer less than or equal to M; and sending $T_2$ reference signals reflected by the E unit cells to the network device, where the $T_2$ reference signals are used to estimate a cascaded channel, the $T_2$ reference signals are processed based on the first codebook, $T_2$ is a positive integer greater than or equal to a path of an angular domain of the cascaded channel and less than M, and the cascaded channel includes a channel between the network device and the RIS and a channel between the RIS and a terminal device.

In an optional implementation, the first codebook meets the following relationship: $W_{Dr} = (D_{r_{new}}(:, L) \times D_r(:, L)^{-1})^H$, where $W_{Dr}$ represents the first codebook, $D_{r_{new}}$ represents a new dictionary matrix that is of the angular domain and that is obtained based on the first codebook, $D_r$ represents an original dictionary matrix of the angular domain, L represents the path of the angular domain, $X^H$ represents a conjugate transpose matrix of a matrix X, and $D(:, L)$ represents taking L column vectors of a matrix D.

In an optional implementation, a dimension of $D_{r_{new}}$ is $T_2 \times R$, and R represents a resolution of the angular domain.

In an optional implementation, the first subarray is a linear array, a dimension of $D_r$ is $N_{sub} \times R$, and $N_{sub}$ represents a quantity of unit cells included in the first subarray; or the first subarray is a planar array, and $D_r = D_{rH} \otimes D_{rV}$, where $D_{rH}$ represents a row matrix, $D_{rV}$ represents a column matrix, a dimension of $D_{rH}$ is $p \times R$, a dimension of $D_{rV}$ is $q \times R$, a dimension of the first subarray is $p \times q$, and $a \otimes b$ represents solving for a Kronecker product of a and b, and R represents the resolution of the angular domain.

In an optional implementation, the receiving third information from the network device includes: receiving the first codebook from the network device; or receiving an index that is of the path of the angular domain in the original dictionary matrix of the angular domain and that is from the network device.

In an optional implementation, the method further includes: receiving fourth information from the network device, where the fourth information includes one or more of the following: a value of N, a quantity of rows of the N unit cells, or a quantity of columns of the N unit cells.

In an optional implementation, the N unit cells are continuous unit cells.

For technical effects brought by the third aspect or the optional implementations, refer to the descriptions of the technical effects of the first aspect or the corresponding implementations, and/or refer to the descriptions of the technical effects of the second aspect or the corresponding implementations.

According to a fourth aspect, a communication apparatus is provided. The apparatus may implement the method performed by the RIS in the first aspect, the second aspect, the third aspect, or any possible design of the first aspect, the second aspect, or the third aspect, or is configured to implement the method performed by the network device in the first aspect, the second aspect, the third aspect, or any possible design of the first aspect, the second aspect, or the third aspect, or is configured to implement the method performed by the terminal device in the first aspect, the second aspect, the third aspect, or any possible design of the first aspect, the second aspect, or the third aspect. For example, the apparatus is the RIS, the terminal device, the network device, a component in the RIS, a component in the terminal device, or a component in the network device.

In an optional implementation, the apparatus may include modules that are in one-to-one correspondence with the method/operations/steps/actions described in the first aspect to the third aspect and any possible implementation. The modules may be implemented by a hardware circuit, software, or a combination of the hardware circuit and software. In an optional implementation, the apparatus includes a processing unit (sometimes also referred to as a processing module) and a transceiver unit (sometimes also referred to as a communication unit, a communication module, or a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general name for these functional modules.

For another example, the apparatus includes a processor that is coupled to a memory, and is configured to execute an instruction in the memory, to implement the method described in the first aspect to the third aspect and any possible implementation. Optionally, the apparatus further includes another component, for example, an antenna, an input/output module, and an interface. These components may be hardware, software, or a combination of software and hardware.

According to a fifth aspect, a computer-readable storage medium is provided. The computer-readable storage medium is configured to store a computer program or instructions. When the computer program or the instructions are run, the method according to any one of the first aspect to the third aspect is implemented.

According to a sixth aspect, a computer program product including instructions is provided. When the computer program product runs on a computer, the method according to any one of the first aspect to the third aspect is implemented.

According to a seventh aspect, a chip system is provided. The chip system includes a logic circuit (which may alternatively be understood as that the chip system includes a processor, and the processor may include the logic circuit and the like), and may further include an input/output interface. The input/output interface may be configured to receive a message, or may be configured to send a message. The input/output interface may be a same interface. In other words, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than a sending and receiving function in the method described in the first aspect to the third aspect and any possible implementation. The logic circuit may be further configured to transmit a message to the input/output interface, or receive, from the input/output interface, a message from another communication apparatus. The chip system may be configured to implement the method described in the first aspect to the third aspect and any possible implementation. The chip system may include a chip, or may include a chip and another discrete component.

Optionally, the chip system may further include a memory, and the memory may be configured to store instructions. The logic circuit may invoke the instructions stored in the memory to implement a corresponding function.

According to an eighth aspect, a communication system is provided. The communication system may include an apparatus configured to implement the first aspect and any possible design of the first aspect, an apparatus configured to implement the second aspect and any possible design of the second aspect, and an apparatus configured to implement the third aspect and any possible design of the third aspect.

BRIEF DESCRIPTION OF DRAWINGS

FIG. 1 is a diagram of an application scenario according to an embodiment of this application;
FIG. 2 is a diagram of a working principle of a RIS;
FIG. 3 is a flowchart of a channel estimation method according to an embodiment of this application;
FIG. 4 is a diagram of a structure of a communication apparatus according to this application;
FIG. 5 is a diagram of a structure of another communication apparatus according to this application; and
FIG. 6 is a diagram of a structure of another communication apparatus according to this application.

DESCRIPTION OF EMBODIMENTS

Embodiments of this application provide a channel estimation method and an apparatus. The method and the apparatus are based on a same inventive concept. Because the method and the apparatus have similar principles for resolving problems, for implementations of the apparatus and the method, refer to each other, and no repeated description is provided. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In embodiments of this application, "at least one" means one or more, and "a plurality of" means two or more. In addition, it should be understood that, in the descriptions of embodiments of this application, terms such as "first" and "second" are merely used for distinguishing and description, but should not be understood as an indication or implication of relative importance, and should not be understood as an indication or implication of a sequence.

The channel estimation method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or is applied to various future communication systems, for example, a 6th generation (6th generation, 6G) communication system. The method provided in embodiments of this application may be further applied to a Bluetooth system, a wireless fidelity (wireless fidelity, Wi-Fi) system, a long range radio (long range radio, LoRa) system, or an internet of vehicles system. The method provided in embodiments of this application may be further applied to a satellite communication system. The satellite communication system may be integrated with the foregoing communication system.

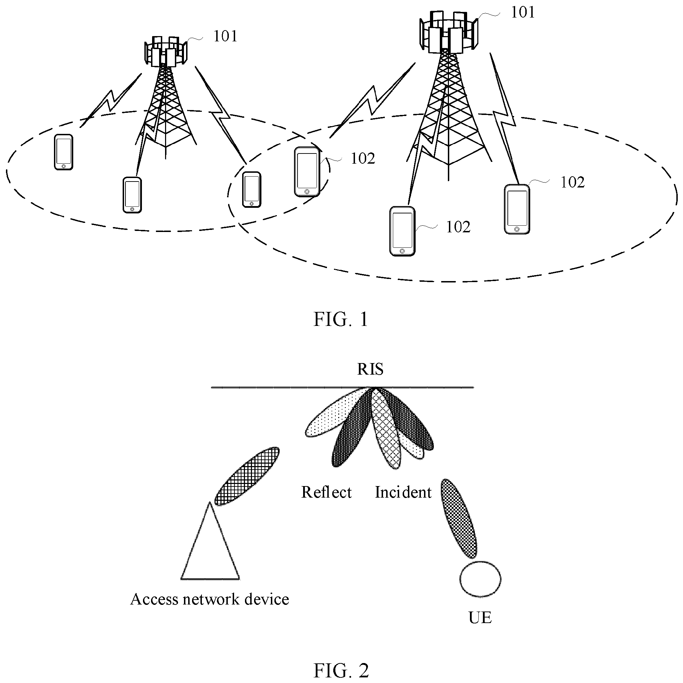

For ease of understanding, an application scenario of embodiments of this application is described by using an architecture of a communication system shown in FIG. 1 as an example. As shown in FIG. 1, the communication system includes network devices 101 and terminal devices 102. The apparatus provided in embodiments of this application may be used in the network device 101 or the terminal device 102. It may be understood that FIG. 1 shows merely one possible architecture of the communication system that can be used in embodiments of this application. In another possible scenario, another device may also be included in the architecture of the communication system.

The network device 101 is a node in a radio access network (radio access network, RAN), and may also be referred to as a base station or a RAN node (or device). Currently, some examples of a radio access network device are: a next-generation base station (gNodeB/gNB/NR-NB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), a satellite device, a network device in a 5G communication system, or a network device in a possible future communication system. Alternatively, the network device 101 may be another device that has a function of a network device. For example, the network device 101 may alternatively be a device that functions as a network device in device-to-device (device-to-device, D2D) communication, internet of vehicles communication, or machine-to-machine communication. Alternatively, the network device 101 may be a network device in a possible future communication system.

In some deployments, the gNB may include a central unit (central unit, CU) and a distributed unit (distributed unit, DU). The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical (physical, PHY) layer. Information at the RRC layer may eventually become information at the PHY layer, or is converted from the information at the PHY layer. Therefore, in this architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device 102, for example, including a user equipment (user equipment, UE), a mobile station (mobile station, MS), or a mobile terminal (mobile terminal, MT), is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a laptop computer, a palmtop computer, a mobile internet device (mobile internet device, MID), a wearable device (for example, a smartwatch, a smart band, or a pedometer), a vehicle-mounted device (for example, a vehicle, a bicycle, an electric car, an aircraft, a ship, a train, or a high-speed train), a virtual reality (virtual reality, VR) device, an augmented reality (augmented reality, AR) device, a wireless terminal in industrial control, a smart home device (for example, a refrigerator, a television, an air conditioner, or an electricity meter), an intelligent robot, a workshop device, a wireless terminal in self driving, a wireless terminal in remote surgery, a wireless terminal in a smart grid (smart grid), a wireless terminal in transportation safety, a wireless terminal in a smart city, a wireless terminal in a smart home, a flight device (for example, an intelligent robot, a hot air balloon, an uncrewed aerial vehicle, or an aircraft). Alternatively, the terminal device may be another device that has a terminal function. For example, the terminal device may alternatively be a device that functions as a terminal in D2D communication. A terminal device that has a wireless transceiver function and a chip that can be disposed in the terminal device are collectively referred to as the terminal device in embodiments of this application.

The following describes technical terms that may be used in embodiments of this application.

In this specification, $X^H$ represents a conjugate transpose matrix of X. *diag*(X) represents taking a diagonal matrix of X. X(:,Y) represents taking Y column vectors in a matrix X.

A reference signal may be provided by a transmitter to a receiver, and may be used for channel estimation, channel sounding, or the like. For example, the reference signal may also be referred to as a pilot signal.

A RIS is a digitally reconfigurable artificial electromagnetic surface, and is of an artificial composite structure formed by a large quantity of sub-wavelength digitally reconfigurable artificial electromagnetic units (or reflection elements) in a specific macroscopic arrangement manner (periodically or non-periodically). Based on a specific material of the reflection element, the RIS may be classified into an antenna array-based structure and a metamaterial surface-based structure. By adjusting phase shifts of all reflection elements, reflected signals may be configured to propagate in a required direction. Due to rapid development of a metamaterial, a reflection coefficient of each element may be configured in real time to adapt to a dynamically fluctuating radio propagation environment.

Because a basic unit and an arrangement manner of the RIS can be designed as required, a limitation that a conventional material is difficult to accurately control at an atomic or molecular level can be overcome, and an extraordinary medium parameter that cannot be implemented by the conventional material and a conventional technology can be constructed. For example, a medium parameter including both a positive dielectric constant and a negative dielectric constant. A material having the extraordinary medium parameter may be referred to as a metamaterial. An electromagnetic wave is controlled by changing a space arrangement of a digital coding unit. In other words, a feature of an electromagnetic field of a specific spatial position may be controlled by changing status distribution of the basic unit.

Therefore, in some embodiments, the metamaterial may also be referred to as a digital electromagnetic metamaterial or an electromagnetic coding metamaterial.

The RIS can be mounted on a large plane (such as an indoor wall or ceiling or an outdoor building or sign) to reflect radio frequency energy around an obstacle and create a virtual line-of-sight propagation path between a communication source and a target.

For example, FIG. 2 is a diagram of a working principle of a RIS. FIG. 2 uses an example in which two parties of communication are a network device and a UE respectively and in an uplink transmission process. As shown in FIG. 2, after a signal sent by the UE arrives at the RIS, the signal may be reflected by a unit cell (or referred to as a unit, a cell, or the like) of the RIS, and the network device may receive the reflected signal from the RIS.

Assuming that the network device has K antennas, the RIS has M unit cells, and the UE has a single antenna, a signal obtained through demodulation of a received reference signal by the network device may be represented as:

$$Y_{all} = F^H diag(W)H + H_{BS-UE} \qquad \text{(Formula 1)}$$

$F^H$ represents a conjugate transpose matrix of a channel F between the network device and the RIS. $Y_{all}$ represents the signal obtained through demodulation of the received reference signal by the network device. $W$ represents a weight of the unit cell included in the RIS, and $diag(W)$ represents diagonalization of a matrix $W$. $H$ represents a channel between the RIS and the UE, and $H_{BS-UE}$ represents a channel between the network device and the UE. A dimension of $Y_{all}$ is K × 1, where K is a quantity of antennas of the network device. For a method for estimating the channel between the network device and the UE, refer to the conventional technology. Details are not described herein again. This specification focuses on a cascaded channel, that is, the channel between the network device and the RIS and the channel between the RIS and the UE.

The cascaded channel can be obtained through two measurement processes, which are as follows:

First measurement process: Disable the RIS. In this case, the RIS no longer works, and the channel $H_{BS-UE}$ between the network device and the UE can be obtained through measurement.

Second measurement process: Enable the RIS, and the RIS reflects a signal between the network device and the UE. In this case, $Y_{all}$ can be obtained through measurement, and therefore, the cascaded channel can be obtained. For example, a signal received by the network device through the cascaded channel may be represented as:

$$Y = Y_{all} - H_{BS-UE} = F^H diag(W)H \qquad \text{(Formula 2)}$$

A dimension of Y is K × 1. A difference between Y and $Y_{all}$ is that, in addition to the cascaded channel, $Y_{all}$ further considers the channel between the network device and the UE, while Y considers the cascaded channel but does not consider the channel between the network device and the UE.

Conjugate transpose is performed on Y to obtain:

$$Y^H = W^H G \qquad \text{(Formula 3)}$$

$Y^H$ represents a conjugate transpose matrix of Y, $W^H$ represents a conjugate transpose matrix of $W$, $G$ represents the cascaded channel, $G = diag(H^H)F$, and a dimension of $G$ is M × K.

For example, the UE sends T reference signals, the T reference signals received by the network device may be represented as:

$$Y_T^H = W_T^H G \qquad \text{(Formula 4)}$$

A dimension of $W_T^H$ is T × M, and a dimension of $Y_T^H$ is T × K. $W_T^H$ represents a conjugate transpose matrix of $W_T$, and $W_T$ represents a weight of a unit cell that is included in the RIS and that is used to reflect the T reference signals.

Generally, the cascaded channel may be obtained through the following relationship:

$$\tilde{G} = (W_T^H)^+ Y_T^H \qquad \text{(Formula 5)}$$

$\tilde{G}$ represents an estimated value of the cascaded channel, and $(W_T^H)^+$ represents a pseudo-inverse matrix of $W_T^H$. If Formula 5 is expected to have a solution, T needs to be greater than or equal to M. It can be learned that, when a quantity of unit cells included in the RIS is excessively large, overheads of the reference signal also increase correspondingly.

In view of this, an embodiment of this application provides a channel estimation method, to reduce the overheads of the reference signal during channel estimation. In this embodiment of this application, the cascaded channel is, for example, a sparse channel. In this embodiment of this application, a terminal device may send reference signals in two rounds. In a first round, $T_1$ reference signals are sent. $T_1$ is a positive integer greater than or equal to N and less than M, and N unit cells are some of unit cells included in the RIS. In other words, N is less than a total quantity of the unit cells included in the RIS. Optionally, N may be far less than M. For example, an order of magnitude of N is a first order of magnitude, an order of magnitude of M is a second order of magnitude, and the first order of magnitude is less than the second order of magnitude. For example, the first order of magnitude is "tens". To be specific, a first subarray may include dozens of unit cells, for example, N = 40. The second order of magnitude is "thousands". To be specific, the RIS may include thousands of unit cells, for example, M = 1024. Optionally, even if $T_1$ is greater than a path of an angular domain, an order of magnitude of $T_1$ may be the same as an order of magnitude of the path of the angular domain. In a second round, the terminal device may send $T_2$ reference signals. $T_2$ is a positive integer greater than or equal to the path of the angular domain of the cascaded channel and less than M. Generally, the path of the angular domain is far less than the quantity of the unit cells included in the RIS. For example, the order of magnitude of the path of the angular domain is the same as that of N. For example, the path of the angular domain is 20. Optionally, even if $T_2$ is greater than the path of the angular domain, an order of magnitude of $T_2$ may be the same as the order of magnitude of the path of the angular domain. Therefore, a quantity of reference signals sent by the terminal device may be less than (or even far less than) the total quantity of the unit cells included in the RIS. Therefore, the overheads of the reference signal are reduced. In addition, because $T_1$ is greater than or equal to N, accuracy of the path of the angular domain of the cascaded channel obtained through estimation based on the $T_1$ reference signals can be ensured, and a first codebook determined based on the path of the angular domain is accurate. Therefore, accuracy of the cascaded channel estimated based on the $T_2$ reference signals can be improved.

To better describe embodiments of this application, the following describes the method provided in embodiments of this application with reference to the accompanying drawings. In embodiments of this application, an example in which a terminal device is a UE is used for description. The method provided in embodiments of this application may be applied to the network architecture shown in FIG. 1. For example, the UE in embodiments of this application is the terminal device 102 in FIG. 1, the network device in embodiments of this application is the network device 101 in FIG. 1, and the RIS in embodiments of this application may be disposed between the terminal device 102 and the network device 101 in FIG. 1. For example, refer to FIG. 2.

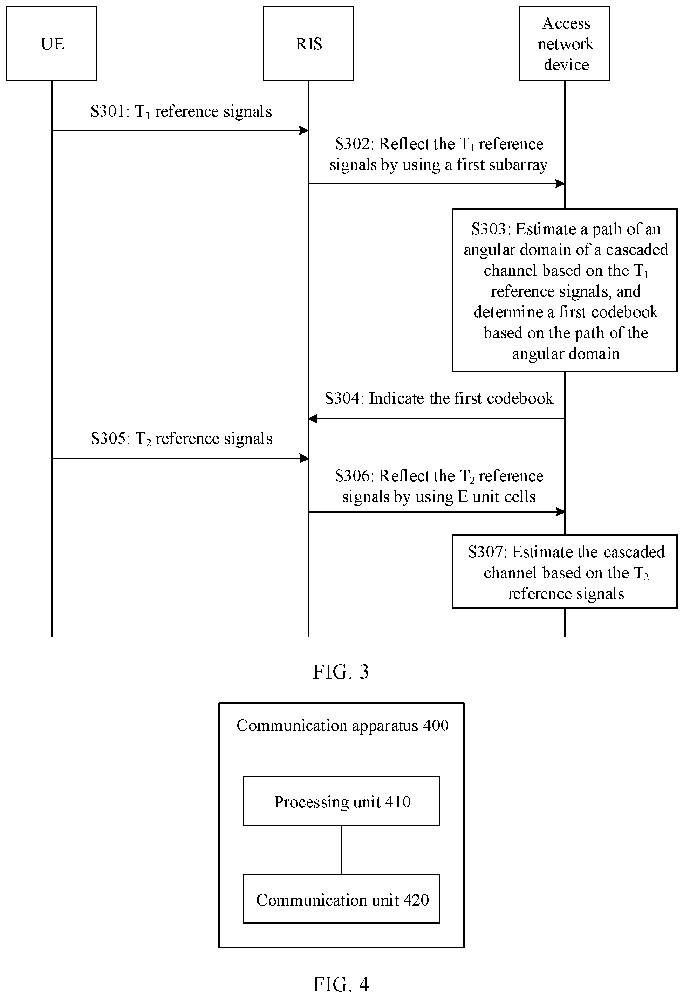

FIG. 3 is a flowchart of a channel estimation method according to an embodiment of this application.

S301: A UE sends $T_1$ reference signals. The UE sends the $T_1$ reference signals to a network device. However, a RIS is disposed between the UE and the network device, and receives the $T_1$ reference signals first.

It may also be understood as that the UE sends a reference signal $T_1$ times. The reference signal sent each time may be considered as one reference signal. For example, the UE may send the $T_1$ reference signals at $T_1$ pieces of time. One piece of time is, for example, one time point, one orthogonal frequency division multiplexing (orthogonal frequency division multiplexing, OFDM) symbol (symbol), or one slot (slot).

For example, a value of $T_1$ is predefined, for example, protocol-predefined. Alternatively, the value of $T_1$ is determined through negotiation between the UE and the network device before S301. Alternatively, the value of $T_1$ may be configured by the network device. For example, before S301, the network device sends second information to the UE to indicate the value of $T_1$.

S302: A first subarray of the RIS reflects the $T_1$ reference signals, and correspondingly the network device receives the $T_1$ reference signals reflected by the first subarray of the RIS.

The RIS may include M unit cells, the first subarray may include N unit cells in the M unit cells, M is a positive integer, and N is a positive integer less than M. For example, the N unit cells are continuous unit cells, so that a resolution of the RIS is not reduced. Alternatively, there may be at least two discontinuous unit cells in the N unit cells. For example, in the unit cells included in the RIS, if a spacing between adjacent unit cells is small, a coupling between the unit cells may be excessively large. In this case, the first subarray may include discontinuous unit cells, to reduce a resolution of the first subarray.

In other words, the RIS may reflect the $T_1$ reference signals by using some unit cells instead of using all unit cells, so that power consumption of the RIS can be reduced. $T_1$ may be a positive integer greater than or equal to N. For example, $T_1$ is also less than M. Therefore, overheads for sending the $T_1$ reference signals by the UE are small. For example, N may be far less than M. For example, M is in an order of magnitude of thousands, and N is in an order of magnitude of hundreds or tens. Therefore, transmission overheads of the reference signal can be reduced to a large extent.

As described in S301, the network device may send the second information to the UE to indicate the value of $T_1$. Alternatively, the second information may not indicate the value of $T_1$, but indicate a value of N. After receiving the second information, the UE may determine the value of $T_1$ based on the value of N, for example, set $T_1$ to a positive integer greater than or equal to N.

If the RIS needs to reflect the $T_1$ reference signals by using the first subarray, the RIS needs to determine the first subarray first. Optionally, the first subarray may be determined through negotiation between the RIS and the network device in advance, where for example, negotiation is completed before S302; the first subarray may be protocol-predefined; or the first subarray may be determined by the network device. If the first subarray is determined by the network device, the network device may send fourth information to the RIS before S302, where the fourth information may indicate the first subarray. For example, the fourth information indicates (or includes) one or more of the following: the value of N, a quantity of rows of the N unit cells (or a quantity of rows of the first subarray), or a quantity of columns of the N unit cells (or a quantity of columns of the first subarray). That is, the fourth information may indicate the first subarray by indicating a parameter of the first subarray, and the RIS may determine the first subarray based on the fourth information.

Each time the RIS reflects one reference signal by using the first subarray, a weight of the first subarray is changed once. For example, the RID may determine the weight through discrete Fourier transform (discrete Fourier transform, DFT) or use a Hadamard weight.

S303: The network device estimates a path of an angular domain of a cascaded channel based on the $T_1$ reference signals, and determines a first codebook based on the path of the angular domain. The cascaded channel includes a channel between the network device and the RIS and a channel between the RIS and the UE. For example, embodiments of this application may be applied to a time division duplex (time division duplex, TDD) system. In the TDD system, uplink and downlink channels have corresponding features. Therefore, the cascaded channel may be an uplink channel or may be a downlink channel.

Optionally, the network device may estimate the path of the angular domain of the cascaded channel based on the $T_1$ reference signals by using a compressed sensing algorithm. Alternatively, the network device may estimate the path of the angular domain of the cascaded channel based on the $T_1$ reference signals by using another algorithm such as a statistical algorithm. This is not specifically limited.

For example, the path of the angular domain of the cascaded channel is represented by L. For example, the network device determines L by using the compressed sensing algorithm. For example, the network device may determine L by using the compressed sensing algorithm such as an orthogonal matching pursuit (orthogonal matching pursuit, OMP) algorithm, a subspace pursuit (subspace pursuit, SP) algorithm, or a compressive sampling matching pursuit (compressive sampling matching pursuit, CoSaMP) algorithm. Alternatively, the network device may determine L by using an improved OMP algorithm (for example, a multi-step-OMP (multi-step-OMP) algorithm).

The following briefly describes the OMP algorithm. For example, for a system of linear equations Ax = b, if each column in a matrix A is used as a variable, the OMP algorithm selects a variable with a highest correlation with a current residual in each iteration process. After each iteration ends, a residual used to determine a correlation of the variable may be obtained in a previous iteration process, and each iteration process may obtain a residual used in a next iteration process. A residual in one iteration process may be obtained by calculating a difference between b and an orthogonal projection of b on subspace of the matrix A. The subspace is formed by the variables selected in the iteration processes. For example, each time one iteration is performed, a variable selected in this iteration may be added to the subspace. One variable may be obtained in one iteration process, and a quantity of iterations may be determined based on a quantity of required variables. For example, if 30 variables are required, 30 iterations may be performed.

In other words, if there is no zero element in x, b needs to belong to column vector space Span(A) of the matrix A. However, because there are a large quantity of zero elements in x, b needs to belong to subspace of Span(A) (where b belongs to both the subspace and full space of Span(A)). For example, the subspace of Span(A) to which b belongs is denoted as Span($A_{sub}$). $A_{sub}$ includes one or more column vectors of the matrix A, and x corresponding to these column vectors is denoted as $x_{sub}$. If $A_{sub}$ and $x_{sub}$ can be obtained, the following optimization problem can be solved:

$$argmin_{x_{sub}} \|A_{sub}x_{sub} - b\|_2^2 \qquad \text{(Formula 6)}$$

*argmin f(x)* represents a variable value that enables a target function *f(x)* to be a minimum value. $\|X\|_2^2$ represents a second normal form of a matrix X.

Steps of the OMP algorithm are as follows:

S11: Input the matrix A, b, and a quantity Q of variables that need to be selected, and initialize a residual $r_0 = b$, an orthogonal projection matrix $P_0 = 0$, a subspace index (index) set S = Ø, and a restored signal x = 0, where Ø represents an empty set, that is, the set S is empty during initialization.

S12: Calculate $i = argmax_i |A_i{}^H r_k|$, and put i into the set S, that is, S = S U {i}, where U represents solving for a union set, i represents an index of a variable selected from the matrix A in one iteration, $A_i$ represents a column vector that has a largest residual in column vectors included in the matrix A, and $r_k$ represents a residual of a $k^{th}$ cycle (or iteration).

S13: Calculate $P_k = A_S(A_S{}^H A_S)^{-1} A_S{}^H$ and $r_k = (I-P_k)b$, where $P_k$ represents a projection of a variable selected in the $k^{th}$ iteration on the subspace of the matrix A, $A_S$ represents a set of column vectors that have a largest residual and that are determined from the matrix A in cycles after the $k^{th}$ cycle (or iteration), and $I$ represents an identity matrix.

S14: Repeat the second step and the third step for Q times.

S15: Calculate $x_S = (A_S{}^H A_S)^{-1} A_S{}^H b$, where $x_S$ represents a value of a position that is in x and that is indicated by an element included in the set S.

S16: Return $x_S$.

After A cycles (or iterations) are performed, $A_S = A_{sub}$, and $x_S = x_{sub}$.

In this embodiment of this application, $A = D_r$ or $A = W^H D_r$. To be specific, the matrix A may be considered as a dictionary matrix. $r_k = Res_t$, where $Res_t$ is described below. $b = Y_T^H$, and x = G. $Y_T^H$ represents a conjugate transpose matrix of T reference signals $Y_T$ received by the network device, and G represents a cascaded channel. $D_r$, $W^H D_r$, and the like are described below.

The residual in each iteration process may be determined in the following manner:

$$i = argmax \|D_r(:, i)^H Res_{t-1}\|_2^2 \qquad \text{(Formula 7)}$$

$$L_t = L_{t-1} \cap i \qquad \text{(Formula 8)}$$

$$Res_t = \|I - Dr(:, L_t)Dr(:, L_t)^+ Y_T^H\|_2^2 \qquad \text{(Formula 9)}$$

$$Res_0 = \|Y_T^H\|_2^2 \qquad \text{(Formula 10)}$$

$L_{t-1} \cap i$ represents an intersection of $L_{t-1}$ and $i$. $D_r(:, i)$ represents taking i column vectors of a matrix $D_r$, and $D_r(:, i)^H$ represents a conjugate transpose matrix of $D_r(:, i)$. argmax f(x) represents a variable value that enables the target function f(x) to be a maximum value. Res represents a residual, $Res_0$ represents an initialized residual (for example, b), $Res_{t-1}$ represents a residual obtained in a $(t-1)^{th}$ cycle (or iteration) process, and $Res_t$ represents a residual obtained in a $t^{th}$ cycle (or iteration) process. $L_{t-1}$ represents a set of indexes, in the dictionary matrix, of paths of the angular domain determined in the $(t-1)^{th}$ cycle (or iteration) process, and $L_t$ represents a set of indexes, in the dictionary matrix, of paths of the angular domain determined in the $t^{th}$ cycle (or iteration) process.

It can be learned from the foregoing steps that, the OMP algorithm selects one variable in each iteration process and puts the variable into the subspace, so that it can be ensured that an optimal solution is selected in each iteration. However, if two variables are correlated, the two variables may not be two globally optimal solutions from a comprehensive perspective. For example, refer to Table 1. It can be learned that, in each iteration process, the OMP algorithm focuses on a current optimal solution, but does not focus on a globally optimal solution. As a result, a finally selected variable may not be a globally optimal variable. This causes a problem of local optimality in the OMP algorithm. In Table 1, "index" represents an index of a column vector in the matrix A.

Table 1

| 10*10 matrix with a degree of sparsity of 4 | | | | |
|---|---|---|---|---|
| Quantity of iterations | OMP algorithm | | Optimal case | |
| | index | Normalized residual | index | Normalized residual |
| 1 | 1 | 0.81 | 1 | 0.81 |
| 2 | 1, 6 | 0.47 | 1, 8 | 0.61 |
| 3 | 1, 6, 2 | 0.23 | 1, 8, 4 | 0.26 |
| 4 | 1, 6, 2, 8 | 0.05 | 1, 8, 4, 2 | 0.017 |

In view of this, in this embodiment of this application, the multi-step-OMP algorithm may be used to determine the path L of the angular domain. Steps of the multi-step-OMP algorithm are as follows:

S21: Input the matrix A, b, and a degree of sparsity Q of a matrix b, and initialize a residual $r_0$ = b, an orthogonal projection matrix $P_0$ = 0, a subspace index set S = Ø, a restored signal x = 0, and a residual convergence threshold ε, where Ø represents an empty set, that is, the set S is empty during initialization.

S22: Calculate P = $argmax_P|A_P{}^Hr_k|$, and put a set P into the set S, that is, S = S ∪ {P}. The set P is a set of indexes of P variables selected from the matrix A in one iteration. The P variables are P variables with a highest correlation with a current residual in one iteration process. P is a positive integer. For example, P may be greater than or equal to 2. It can be learned that, in the multi-step-OMP algorithm, a plurality of variables may be selected in each iteration, so that a probability of obtaining a globally optimal solution can be improved. When P = Q, the multi-step-OMP algorithm may be considered as an SP algorithm. When Q = 2P, the multi-step-OMP algorithm may be considered as a CoSaMP algorithm.

$A_P$ represents a set of P column vectors that have a largest residual in column vectors included in the matrix A. $r_k$ represents a residual of a $k^{th}$ cycle (or iteration).

S23: Calculate $P_k = A_S(A_S{}^HA_S)^{-1}A_S{}^H$ and $r_k = (I-P_k)b$, where I represents an identity matrix, $A_S$ represents a set of column vectors that have a largest residual and that are determined from the matrix A in cycles after the $k^{th}$ cycle (or iteration), and $P_k$ represents a projection of a variable selected in the $k^{th}$ iteration on the subspace of the matrix A.

S24: Repeat the second step and the third step until a quantity of elements included in the set S is equal to Q+P.

S25: Calculate Q = $argmax_K|A_S{}^Hb|$, to be specific, determine Q elements that are in (Q+P) elements in the set S and that have a largest projection on the matrix b, to set S = {Q}, and calculate $P_k = A_S(A_S{}^HA_S)^{-1}A_S{}^H$ and $r_k = (I - P_k)b$.

Through S25, an element that is in the set S and that has a small projection on the matrix b can be removed. The removed element may include an element that has a correlation in the set S. In a beam domain of a channel, when a plurality of paths are grouped together (where for example, in an angular domain of the channel, paths of a path clusters are close, the path cluster includes the plurality of paths, and in this case, it is difficult to distinguish between the paths), a side lobe may be generated on a variable corresponding to another index in the set S because energy of the plurality of paths is concentrated. When the OMP algorithm is used, if a side lobe is generated on a variable, a projection of the variable on the matrix b becomes large. Therefore, it may be mistakenly determined that the variable corresponding to the index is also a path, and the index is considered as a correlated element in the set S. Therefore, in this embodiment of this application, when the multi-step-OMP algorithm is used, a correlated element may be removed, which is equivalent to removing a mistakenly determined path, so that an obtained result is closer to a real path in the angular domain.

Therefore, processing manners such as selecting a large quantity of variables in each iteration process and removing the correlated element by using the multi-step-OMP algorithm can minimize a case of local optimality and improve the probability of obtaining the globally optimal solution.

S26: Repeat the second, third, fourth, and fifth steps until $|r_k - r_{k-1}|$ < ε.

S27: Calculate $x_s = (A_S{}^HA_S)^{-1}A_S{}^Hb$, where $x_s$ represents a value of an element whose position is S in x.

S28: Return $x_s$.

In this embodiment of this application, A = $D_r$ or A = $W^HDr$, and $r_k$ = $Res_t$, $b = Y_T^H$, and x = G. For a residual calculation manner, refer to the foregoing descriptions.

After obtaining the path L of the angular domain, the network device may determine the first codebook based on the path of the angular domain. The first codebook may include at least one weight. For example, one row vector in the first codebook is one weight, or one column vector in the first codebook is one weight. Each of the at least one weight is a weight of E unit cells included in the RIS, where E is a positive integer less than or equal to M. In other words, each weight may be a weight of the M unit cells included in the RIS, or may be a weight of some unit cells included in the RIS. If the E unit cells are some unit cells included in the RIS, for example, the E unit cells are the unit cells included in the first subarray, E = N. Alternatively, the E unit cells and the N unit cells are different unit cells, or the E unit cells and the N unit cells may have an intersection but are not completely the same. In the two cases, E may be equal to or not equal to N.

When reflecting the reference signal, the RIS may weight the reference signal based on the weight included in the first codebook. For example, each time the RIS reflects one reference signal, the RIS weights the reference signal based on one weight included in the first codebook or weights a dictionary matrix of the angular domain, to obtain a new matrix after weighting. If the new matrix is not orthogonal to the path of the angular domain, a residual is generated. Consequently, accuracy of a channel estimation result is reduced. Therefore, in this embodiment of this application, the new matrix obtained based on each weight included in the first codebook may be enabled to be orthogonal to the path of the angular domain, to improve the accuracy of the channel estimation result.

For example, the angular domain of the cascaded channel may be represented as:

$$G_{angle} = D_r{}^HG \qquad\qquad (\text{Formula } 11)$$

$G_{angle}$ represents an angular domain matrix of the cascaded channel, and a dimension of $G_{angle}$ is M × K. $D_r$ represents an original dictionary matrix of the angular domain, and $D_r{}^H$ represents a conjugate transpose matrix of $D_r$. $D_r$ may be represented as:

$$D_r = [a_N(\frac{2\pi d}{\lambda}f(\phi_0)), \dots, a_N(\frac{2\pi d}{\lambda}f(\phi_R))] \qquad \text{(Formula 12)}$$

$a_X(\theta) = \frac{1}{\sqrt{X}}\left[1, e^{j\theta}, \dots, e^{j\theta(X-1)}\right]^H$. For example, X may be replaced with N, θ may be replaced with $\frac{2\pi d}{\lambda}f(\phi_0)$, $\frac{2\pi d}{\lambda}f(\phi_R)$, or the like. That is, a calculation manner of a formula such as $a_N(\frac{2\pi d}{\lambda}f(\phi_0)), \dots, a_N(\frac{2\pi d}{\lambda}f(\phi_R))$ in Formula 12 is provided herein. d represents a physical distance between adjacent unit cells included in the RIS, and $\lambda$ represents a wavelength of an operating frequency band of the RIS. $\phi_0$ represents a 1st angle of the matrix $D_r$, and $\phi_R$ represents an Rth angle of the matrix $D_r$. R represents the resolution of the angular domain. For example, $f(\varphi)$ is $\sin(\varphi)$, $\cos(\varphi)$, $\cos(a)\sin(\varphi)$, or $\sin(a)\cos(\varphi)$. If $f(\varphi)$ is $\cos(a)\sin(\varphi)$ or $\sin(a)\cos(\varphi)$, it indicates that a structure of the RIS is a two-dimensional planar structure. In this case, $\varphi$ may represent a horizontal angle, and a may represent a vertical angle. Alternatively, $\varphi$ may represent a vertical angle, and a may represent a horizontal angle. Optionally, a dimension of $D_r$ may be related to the first subarray. For example, the first subarray is a linear array. In this case, the dimension of $D_r$ may be N × R. For another example, the first subarray is a planar array, for example, $D_r = D_{rH} \otimes D_{rV}$. In this case, the dimension of $D_r$ may be pq × R². $D_{rH}$ represents a row matrix, $D_{rV}$ represents a column matrix, a dimension of $D_{rH}$ is p × R, a dimension of $D_{rV}$ is q × R, and p × q is a dimension of the first subarray. That is, p is a quantity of rows of the unit cells included in the first subarray, and q is a quantity of columns of the unit cells included in the first subarray. a ⊗ b represents solving for a Kronecker product of a and b.

In addition, the cascaded channel may be restored through the following relationship:

$$G = D_r G_{angle} = D_r D_r{}^H G = IG = G \qquad \text{(Formula 13)}$$

I represents an identity matrix. It can be learned that a channel of the cascaded channel in the angular domain may be compressed by using a compressed sensing method. For example, a compression manner is as follows:

$$G = D_r G_{angle} \approx D_r(:,L)\tilde{G}_{angle} \qquad \text{(Formula 14)}$$

$D_r(:,L)$ represents taking L column vectors in $D_r$, and a dimension of $D_r(:,L)$ is M × L. $\tilde{G}_{angle}$ represents an estimated value of the angular domain of the cascaded channel, and a dimension of $\tilde{G}_{angle}$ is L × K. L represents the path of the angular domain of the cascaded channel.

If $D_r$ in Formula 14 is replaced with $W^H D_r$, this may represent a new matrix obtained by performing weighting once. For example, Formula 14 is transformed as follows:

$$W^H D_r G_{angle} \approx W^H D_r(:,L)\tilde{G}_{angle}(:,L) \qquad \text{(Formula 15)}$$

A structure of the dictionary matrix of the angular domain and a structure of a DFT matrix are similar, and each column of the dictionary matrix is orthogonal to each other. Therefore, it can be learned by comparing Formulas 14 and 15 that, if a new matrix obtained through weighting is still a dictionary matrix, it can be ensured that the new matrix is still orthogonal to the path of the angular domain. Therefore, the first codebook in this embodiment of this application may meet the following relationship:

$$W_{Dr} = \left(D_{r_{new}}(:,L) \times D_r(:,L)^{-1}\right)^H \qquad \text{(Formula 16)}$$

$W_{Dr}$ represents the first codebook, $D_{r_{new}}$ represents a new dictionary matrix that is of the angular domain and that is obtained based on the first codebook, $D_r$ represents the original dictionary matrix of the angular domain, L represents the path of the angular domain, and $D_r(:, L)^{-1}$ represents an inverse of $D_r(:, L)$.

Optionally, each weight included in the first codebook may be the weight of the E unit cells included in the RIS, where E may be a positive integer less than or equal to M. For example, a dimension of the first codebook represented by Formula 16 is $M \times T_2$, where $T_2$ is a quantity of reference signals reflected by the RIS based on the first codebook. In other words, E corresponding to the first codebook represented by Formula 16 is equal to M. If the RIS uses the first codebook, the RIS reflects the $T_2$ reference signals by using all unit cells.

Alternatively, E is less than M. In this case, the weight included in the first codebook may alternatively be weights of some unit cells in the M unit cells. In other words, the RIS may alternatively use some unit cells to reflect the $T_2$ reference signals. In this case, the first codebook may meet the following relationship:

$$W_{Dr\_sub} = \left(D_{r_{new}}(:, L) \times Dr_{sub}(:, L)^{-1}\right)^{\mathrm{H}} \qquad \text{(Formula 17)}$$

$W_{Dr\_sub}$ represents a first codebook corresponding to the E unit cells. It may be understood as that $W_{Dr\_sub}$ includes one or more weights, and each weight is the weight of the E unit cells. $D_{r_{new}}$ represents the new dictionary matrix that is of the angular domain and that is obtained based on the first codebook, $Dr\_sub$ represents a dictionary matrix of an angular domain of the E unit cells, a dimension of the dictionary matrix is $E \times L$, L represents the path of the angular domain, and $Dr_{sub}(:, L)^{-1}$ represents an inverse of $Dr_{sub}(:, L)$.

S304: The network device sends third information to the RIS, and correspondingly the RIS receives the third information from the network device.

The third information may indicate the first codebook. The third information may indicate the first codebook in different manners. For example, the third information may include the first codebook. In this case, after receiving the third information, the RIS may directly obtain the first codebook without excessive processing. Implementation is simple.

Alternatively, the third information may include L indexes (indexes). The L indexes are indexes of the path of the angular domain in the original dictionary matrix (for example, $D_r$) of the angular domain. The RIS may obtain the first codebook based on the L indexes and $D_r$. For example, the RIS stores one or more dictionary matrices. If L indexes are received, the RIS may determine, based on the L indexes, corresponding L column vectors in the one or more stored dictionary matrices, and then may determine the first codebook according to some algorithms, for example, Formula (17). If the RIS stores only one dictionary matrix, a quantity of rows of the dictionary matrix may be greater than or equal to a total quantity M of the unit cells included in the RIS. For the first codebook, an amount of information of the L indexes is small, and the first codebook is indicated by indicating the L indexes, so that transmission overheads of the third information can be reduced.

S305: The UE sends the $T_2$ reference signals. The UE sends the $T_2$ reference signals to the network device. However, the RIS is disposed between the UE and the network device, and receives the $T_2$ reference signals first.

It may also be understood as that the UE sends a reference signal $T_2$ times. The reference signal sent each time may be considered as one reference signal. For example, the UE may send the $T_2$ reference signals at $T_2$ pieces of time. One piece of time is, for example, one time point, one OFDM symbol, or one slot.

For example, $T_2$ is a positive integer greater than or equal to the path L of the angular domain. The path of the angular domain is determined by the network device. Therefore, the network device may indicate a value of $T_2$ to the UE. Optionally, before S305, the network device may further send first information to the UE, where the first information may indicate the value of $T_2$, so that the UE can determine the value of $T_2$. Alternatively, the first information may indicate the path of the angular domain, so that the UE can select a positive integer greater than or equal to the path of the angular domain as $T_2$.

S306: The E unit cells of the RIS reflect the $T_2$ reference signals, and correspondingly the network device receives the $T_2$ reference signals reflected by the E unit cells, where E may be equal to M or may be less than M.

If the RIS needs to reflect the $T_2$ reference signals by using the E unit cells, the RIS needs to determine the E unit cells first. Optionally, the E unit cells may be determined through negotiation between the RIS and the network device in advance, for example, negotiation is completed before S302. Alternatively, the E unit cells may be predefined according to a protocol, the E unit cells may be determined by the network device, or the E unit cells may be determined by the RIS. If the E unit cells are determined by the network device, the network device may send fifth information to the RIS before S306, where the fifth information may indicate the E unit cells. For example, the fifth information indicates (or includes) one or more of the following: a value of E, a quantity of rows of the E unit cells, or a quantity of columns of the E unit cells. That is, the fifth information may indicate the E unit cells by indicating a parameter of the E unit cells, and the RIS may determine the E unit cells based on the fifth information. Optionally, the E unit cells are continuous unit cells.

Each time the RIS reflects one reference signal by using the E unit cells, weights of the E unit cells are changed once. For example, the RIS may determine the weight by using the first codebook. The first codebook includes the at least one weight. For example, a quantity of weights included in the first codebook may be greater than or equal to $T_2$. In this case, each time the RIS reflects the reference signal, the RIS may select one weight from the first codebook. For example, if the weights included in the first codebook are arranged in a time sequence, the RIS sequentially selects corresponding weights from the first codebook in the time sequence.

S307: The network device estimates the cascaded channel based on the $T_2$ reference signals.

For example, the network device may estimate the cascaded channel in the following manner:

$$\tilde{G} = D_r(:,L)(W_{Dr}^H D_r(:,L))^+ Y_{T_2}^H \qquad \text{(Formula 18)}$$

$\tilde{G}$ represents an estimated value of the cascaded channel, $Y_{T_2}^H = W_{Dr}^H G$ , and $W_{Dr}^H$ represents a conjugate transpose matrix of $W_{Dr}$. $D_r(:,L)$ represents taking L columns in the matrix $D_r$.

If E = M, that is, the E unit cells are all unit cells of the RIS, the network device estimates the complete cascaded channel. Alternatively, if E < M, that is, the E unit cells are some unit cells of the RIS, the network device may obtain a submatrix of the cascaded channel through estimation. In this case, the network device may take a further measure to obtain the complete cascaded channel. For example, the network device may use, for a channel corresponding to the E unit cells, a parameter estimation algorithm, for example, a multiple signal classification (multiple signal classification, MUSIC) algorithm or an estimating signal parameters via rotational invariance techniques (estimating signal parameters via rotational invariance techniques, ESPRIT) algorithm, to obtain a small-scale coefficient and angular domain information of the channel through estimation, and then restore the channel by using a channel model of a cluster delay line (cluster delay line, CDL), to obtain the cascaded channel.

In this embodiment of this application, two estimation procedures are used. In a first estimation procedure, the path of the angular domain of the cascaded channel is estimated by using the first subarray and a few reference signals, and the network device uses the estimated path of the angular domain to design and transfer, to the RIS, a RIS weight used in a second estimation procedure. In the second estimation procedure, the cascaded channel is estimated by using the designed RIS weight. Generally, a quantity of paths of the angular domain is far less than a quantity of unit cells included in the RIS (for example, in a high frequency case, a current quantity of unit cells included in the RIS is generally about 1000, and paths of the angular domain are generally sparse and may be less than 20), and the designed weight included in the first codebook does not damage orthogonality of the angular domain of the cascaded channel. Therefore, according to the solution provided in this embodiment of this application, overheads of an uplink reference signal can be greatly reduced, and accuracy of channel estimation can be improved.

The following describes a simulation process, to reflect effect brought by this embodiment of this application. The simulation process uses a 3rd generation partnership project (3rd generation partnership project, 3GPP) - cluster delay line type A model (cluster delay line type A model, CDL-A).

In the simulation process, to construct a sparse channel, some paths are selected to construct the sparse channel. For parameters of the sparse channel, refer to Table 2.

Table 2

| Simulation parameters (Simulation parameters) | |
|---|---|
| Parameters (Parameters) | Values (Values) |
| Solutions (Scenarios) | One base station, one RIS, and one UE (1 BS, 1 RIS and 1 UE) |
| Channel model (Channel model) | 3GPP 38.901, CDL-A |
| Carrier frequency (Carrier frequency) | 28 GHz, 15 kHz subcarrier spacing (SCS) |
| Bandwidth (Bandwidth) | 2 RBs |
| RIS channel assumption (RIS channel assumption) | Non-line of sight between the base station and the RIS and between the RIS and the UE (NLOS for BS-RIS and RIS-UE) |
| UE antenna configuration (UE antenna config) | 1 |
| Case 1 (Case 1) | |
| Base station antenna configuration (BS antenna config) | 32: $(U_1,U_2)$ = (32,1); (dH,dV) = (0.5, 0.5)$\lambda$ |
| RIS antenna configuration (RIS antenna config) | 256: $(U_1,U_2)$ = (256,1); (dH,dV) = (0.5, 0.5)$\lambda$ |
| Sparse channel (Sparse channel) | 12 paths (paths), 4 clusters (clusters), and 3 rays (rays) |
| Standard channel (Standard channel) | 460 paths, 23 clusters, and 20 rays |

(continued)

| Case 2 (Case 2) | |
|---|---|
| BS antenna config | 64: (U$_1$, U$_2$) = (32,2); (dH,dV) = (0.5, 0.5)λ |
| RIS antenna config | 256: (U$_1$,U$_2$) = (16,16); (dH,dV) = (0.5, 0.5)λ |
| Sparse channel | 24 paths, 6 clusters, and 4 rays |
| Standard channel | 460 paths, 23 clusters, and 20 rays |

In Table 2, the parameter of the channel model 3GPP 38.901, CDL-A represents that a CDL-A channel model defined in a protocol whose 3GPP protocol version number is 38.901 is used. A value corresponding to the UE antenna configuration (for example, "1" in Table 2) means a quantity of antennas of the UE. In Case 1, the base station antenna configuration is "32: (U$_1$,U$_2$) = (32,1); (dH,dV) = (0.5, 0.5)λ". U$_1$ represents a quantity of horizontal antennas of the base station, U$_2$ represents a quantity of vertical antennas of the base station, (U$_1$, U$_2$) = (32,1) represents that there are 32 horizontal antennas and one vertical antenna, a total quantity of antennas is U$_1$*U$_2$, and "32" before the colon represents the total quantity of antennas. Explanations for the base station antenna configuration in Case 2, the RIS antenna configuration in Case 1 and Case 2, and the like are similar. dH represents a horizontal spacing between antenna elements, and dV represents a vertical spacing between the antenna elements. λ represents a wavelength. (dH,dV) = (0.5, 0.5)λ represents that both the horizontal spacing and the vertical spacing between the antenna elements are 0.5 wavelength.

Refer to Table 3, which shows the parameters of the CDL-A channel model.

Table 3

| cluster | Normalization delay (normalized delay) | Power on (Power in) in [dB] | Angle of departure (Angle of departure, AOD) in [°] | Angle of arrival (Angle of arrival, AOA) in [°] | Zenith of departure (Zenith of departure, ZOD) in [°] | Zenith of arrival (Zenith of arrival, ZOA) in [°] |
|---|---|---|---|---|---|---|
| 1 | 0.0000 | -13.4 | -178.1 | 51.3 | 50.2 | 125.4 |
| 2 | 0.3819 | 0 | -4.2 | -152.7 | 93.2 | 91.3 |
| 3 | 0.4025 | -2.2 | -4.2 | -152.7 | 93.2 | 91.3 |
| 4 | 0.5868 | -4 | -4.2 | -152.7 | 93.2 | 91.3 |
| 5 | 0.4610 | -6 | 90.2 | 76.6 | 122 | 94 |
| 6 | 0.5375 | -8.2 | 90.2 | 76.6 | 122 | 94 |
| 7 | 0.6708 | -9.9 | 90.2 | 76.6 | 122 | 94 |
| 8 | 0.5750 | -10.5 | 121.5 | -1.8 | 150.2 | 47.1 |
| 9 | 0.7618 | -7.5 | -81.7 | -41.9 | 55.2 | 56 |
| 10 | 1.5375 | -15.9 | 158.4 | 94.2 | 26.4 | 30.1 |
| 11 | 1.8978 | -6.6 | -83 | 51.9 | 126.4 | 58.8 |
| 12 | 2.2242 | -16.7 | 134.8 | -115.9 | 171.6 | 26 |
| 13 | 2.1718 | -12.4 | -153 | 26.6 | 151.4 | 49.2 |
| 14 | 2.4942 | -15.2 | -172 | 76.6 | 157.2 | 143.1 |
| 15 | 2.5119 | -10.8 | -12.9 | -7 | 47.2 | 117.4 |
| 16 | 3.0582 | -11.3 | -136 | -23 | 40.4 | 122.7 |
| 17 | 4.0810 | -12.7 | 165.4 | -47.2 | 43.3 | 123.2 |
| 18 | 4.4579 | -16.2 | 148.4 | 110.4 | 161.8 | 32.6 |
| 19 | 4.5695 | -18.3 | 132.7 | 144.5 | 10.8 | 27.2 |
| 20 | 4.7966 | -18.9 | -118.6 | 155.3 | 16.7 | 15.2 |

(continued)

| cluster | Normalization delay (normalized delay) | Power on (Power in) in [dB] | Angle of departure (Angle of departure, AOD) in [°] | Angle of arrival (Angle of arrival, AOA) in [°] | Zenith of departure (Zenith of departure, ZOD) in [°] | Zenith of arrival (Zenith of arrival, ZOA) in [°] |
|---|---|---|---|---|---|---|
| 21 | 5.0066 | -16.6 | -154.1 | 102 | 171.7 | 146 |
| 22 | 5.3043 | -19.9 | 126.5 | -151.8 | 22.7 | 150.7 |
| 23 | 9.6586 | -29.7 | -56.2 | 55.2 | 144.9 | 156.1 |
| Per-cluster parameters (Per-cluster parameters) | | | | | | |
| Parameter | $C_{ASD}$ in [°] | $C_{ASA}$ in [°] | | $C_{ZSD}$ in [°] | $C_{ZSA}$ in [°] | XPR in [dB] |
| Value | 5 | 11 | | 3 | 3 | 10 |

$C_{ASD}$ represents an azimuth spread of departure, $C_{ASA}$ represents an azimuth spread of arrival, $C_{ZSD}$ represents a zenith spread of departure, $C_{ZSA}$ represents a zenith spread of arrival, and XPR represents a cross polarization power ratio of an antenna.

In Table 3, content in square brackets (for example, []) indicates a unit of the parameter.

An indicator of this simulation is a normalized mean squared error (normalized mean squared

$$\text{error, NMSE}) = F \times \frac{\|\tilde{G}_k - G_k\|_2^2}{\|G_k\|_2^2}$$

. F represents an average value, $G_k$ represents an actual cascaded channel corresponding to a $k^{th}$ UE, and $\tilde{G}_k$ represents an estimated value of the cascaded channel corresponding to the $k^{th}$ UE.

Simulation solutions:

Solution 1: Use a channel estimation procedure provided in embodiments of this application. Use a full array of a RIS and traditional OMP algorithm to estimate L based on $T_1$ reference signals, and use a constructed $W_{Dr}$ to estimate a cascaded channel based on $T_2$ reference signals.

Solution 2: Use a channel estimation procedure provided in embodiments of this application. Use a subarray of a RIS and traditional OMP algorithm to estimate L based on $T_1$ reference signals, and use a constructed $W_{Dr}$ to estimate a cascaded channel based on $T_2$ reference signals.

Solution 3: Use a channel estimation procedure provided in embodiments of this application. Use a subarray of a RIS and multi-step-OMP algorithm to estimate L based on $T_1$ reference signals, and use a constructed $W_{Dr}$ to estimate a cascaded channel based on $T_2$ reference signals.

Solution 4: Use a current channel estimation solution (a technical solution provided in an existing document), where a UE sends T reference signals, and a RIS use a random DFT weight to estimate a channel based on a full array of the RIS and traditional OMP algorithm.

Solution 5: Use a current channel estimation solution, where a UE sends T reference signals, and a RIS use a random Hadamard weight to estimate a channel based on a full array of the RIS and traditional OMP algorithm.

To ensure fairness, a quantity ($T_1 + T_2$) of reference signals in each of Solution 1 to Solution 3 is equal to the quantity T of reference signals in each of Solution 4 and Solution 5.

For simulation results, refer to Table 4 to Table 7.

Table 4

| | Technical solution in embodiments of this application | | | | | Technical solution in an existing document | | |
|---|---|---|---|---|---|---|---|---|
| | Quantity of pilots | Solution 1 | Quantity of pilots | Solution 2 | Solution 3 | Quantity of pilots | Solution 4 | Solution 5 |
| Case 1 Sparse channel | $T_1 = 256$ $T_2 = 10$ | 0.03 | $T_1 = 10$ $T_2 = 10$ | 0.82 | 0.151 | T=20 | 0.9 | 0.4 |
| | $T_1 = 256$ $T_2 = 16$ | 0.011 | $T_1 = 16$ $T_2 = 16$ | 0.81 | 0.15 | T=32 | 0.6 | 0.35 |

Table 4 shows a comparison of NMSEs in different technical solutions when quantities of reference signals of the sparse channel are equal in Case 1 (refer to Table 2). Values (for example, 0.03 and 0.82) in Table 4 represent NMSEs.

Table 5

|  | Technical solution in embodiments of this application | | | | | Technical solution in an existing document | | |
|---|---|---|---|---|---|---|---|---|
|  | Quantity of pilots | Solution 1 | Quantity of pilots | Solution 2 | Solution 3 | Quantity of pilots | Solution 4 | Solution 5 |
| Case 2 Sparse channel | $T_1 = 256$ $T_2 = 16$ | 0.083 | $T_1 = 10$ $T_2 = 10$ | 0.41 | 0.28 | T=32 | 0.77 | 0.52 |
|  | $T_1 = 256$ $T_2 = 32$ | 0.011 | $T_1 = 16$ $T_2 = 16$ | 0.25 | 0.13 | T = 64 | 0.57 | 0.32 |
|  | $T_1 = 256$ $T_2 = 64$ | 0.047 | $T_1 = 16$ $T_2 = 16$ | 0.17 | 0.1 | T = 128 | 0.2 | 0.11 |

Table 5 shows a comparison of NMSEs in different technical solutions when quantities of reference signals of the sparse channel are equal in Case 2 (refer to Table 2). Values (for example, 0.083 and 0.41) in Table 5 represent NMSEs.

Table 6

| Case 1 (Sparse condition) | | | | |
|---|---|---|---|---|
| T | 20 | 32 | 48 | 64 |
| Weight in embodiments of this application | 0.15 | - | - | - |
| DFT weight | 0.9 | 0.6 | 0.46 | 0.33 |
| Hadamard weight | 0.4 | 0.35 | 0.21 | 0.14 |

Table 6 shows a comparison of quantities of required reference signals in different technical solutions when NMSEs of a sparse channel are equal in Case 1 (refer to Table 2). Values corresponding to T in Table 6 represent the quantities of reference signals. For the technical solution in embodiments of this application, a quantity of T is a sum of $T_1$ and $T_2$.

Table 7

| Case 2 (Sparse condition) | | | |
|---|---|---|---|
| T | 64 | 96 | 128 |
| Weight in embodiments of this application | 0.13 | - | - |
| DFT weight | 0.57 | 0.39 | 0.2 |
| Hadamard weight | 0.32 | 0.22 | 0.11 |

Table 7 shows a comparison of quantities of required reference signals in different technical solutions when NMSEs of a sparse channel are equal in Case 2 (refer to Table 2). Values corresponding to T in Table 7 represent the quantities of reference signals. For the technical solution in embodiments of this application, a quantity of T is a sum of $T_1$ and $T_2$.

It can be learned from the simulation results that:

(1) In the existing channel estimation solution in which the DFT weight or the Hadamard weight is used, when there is a small quantity of reference signals, performance is unstable, and it needs to take a long time to search for a good weight, which causes low efficiency.

(2) When quantities of used reference signals are equal, the NMSE of the channel estimation solution provided in embodiments of this application is less than 50% of that in the existing solution.

(3) In a condition of a same error (for example, a same NMSE), compared with the existing solution, pilot overheads are reduced by at least 50% in the channel estimation solution provided in embodiments of this application.

It may be understood that, to implement functions in the foregoing embodiments, an embodiment of this application further provides a communication apparatus. The communication apparatus may include a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 4 to FIG. 6 are diagrams of structures of possible communication apparatuses according to embodiments of this application. The communication apparatus may be configured to implement functions of the RIS, the network device, or the UE in the foregoing method embodiments. Therefore, beneficial effects of the foregoing method embodiments can also be implemented. In a possible implementation, the communication apparatus may be the network device or the UE shown in FIG. 1 or FIG. 2, or may be the RIS shown in FIG. 2, or may be a module (for example, a chip) used in the UE, the network device, or the RIS. For related details and effects, refer to the descriptions in the foregoing embodiments.

As shown in FIG. 4, a communication apparatus 400 includes a processing unit 410 and a communication unit 420. Alternatively, the communication unit 420 may be a transceiver unit, an input/output interface, or the like. The communication apparatus 400 may be configured to implement the function of the RIS, the network device, or the terminal device in the method embodiment shown in FIG. 3.

For example, when the communication apparatus 400 is configured to implement the function of the RIS in the method embodiment shown in FIG. 3, the communication unit 420 is configured to send $T_1$ reference signals reflected by a first subarray of the RIS to the network device, where the RIS includes M unit cells, the first subarray includes N unit cells in the M unit cells, M is a positive integer, N is a positive integer less than M, and $T_1$ is a positive integer greater than or equal to N and less than M. The communication unit 420 is further configured to receive third information from the network device, where the third information indicates a first codebook, the first codebook includes at least one weight, the at least one weight is weights of the plurality of unit cells, and the first codebook is determined based on the $T_1$ reference signals. The communication unit 420 is further configured to send $T_2$ reference signals reflected by E unit cells in the M unit cells to the network device, where the $T_2$ reference signals are used to estimate a cascaded channel, the $T_2$ reference signals are processed based on the first codebook, $T_2$ is a positive integer greater than or equal to a path of an angular domain of the cascaded channel and less than M, the cascaded channel includes a channel between the network device and the RIS and a channel between the RIS and the terminal device, and E is a positive integer less than or equal to M.

When the communication apparatus 400 is configured to implement the function of the network device in the method embodiment shown in FIG. 3, the communication unit 420 is configured to receive $T_1$ reference signals that are from the UE and that are reflected by a first subarray of the RIS, where the RIS includes M unit cells, the first subarray includes N unit cells in the M unit cells, M is a positive integer, N is a positive integer less than M, and $T_1$ is a positive integer greater than or equal to N and less than M. The processing unit 410 is configured to: estimate a path of an angular domain of a cascaded channel based on the $T_1$ reference signals, and determine a first codebook based on the path of the angular domain, where the first codebook includes at least one weight, the at least one weight is weights of E unit cells in the M unit cells, the cascaded channel includes a channel between the network device and the RIS and a channel between the RIS and the UE, and E is a positive integer less than or equal to M. The communication unit 420 is further configured to send third information to the RIS, where the third information indicates the first codebook, and the first codebook is used by the RIS to reflect a reference signal. The communication unit 420 is further configured to receive $T_2$ reference signals that are from the UE and that are reflected by the E unit cells, where the $T_2$ reference signals are processed based on the first codebook, $T_2$ is a positive integer greater than or equal to the path of the angular domain and less than M. The processing unit 410 is further configured to estimate the cascaded channel based on the $T_2$ reference signals.

When the communication apparatus 400 is configured to implement the function of the UE in the method embodiment shown in FIG. 3, the communication unit 420 is configured to send $T_1$ reference signals, where the $T_1$ reference signals are reflected to the network device through the RIS, $T_1$ is a positive integer less than M, and M is a quantity of unit cells included in the RIS. The communication unit 420 is further configured to receive first information from the network device, where the first information indicates a value of $T_2$, and $T_2$ is a positive integer less than M. The communication unit 420 is further configured to send $T_2$ reference signals, where the $T_2$ reference signals are reflected to the network device through the RIS, the $T_2$ reference signals are used to estimate a cascaded channel, and the cascaded channel includes a channel between the network device and the RIS and a channel between the RIS and the UE.

For terms and term explanations involved in the foregoing apparatus embodiments, refer to the descriptions in the foregoing method embodiments. Details are not described herein again.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of software functional module.

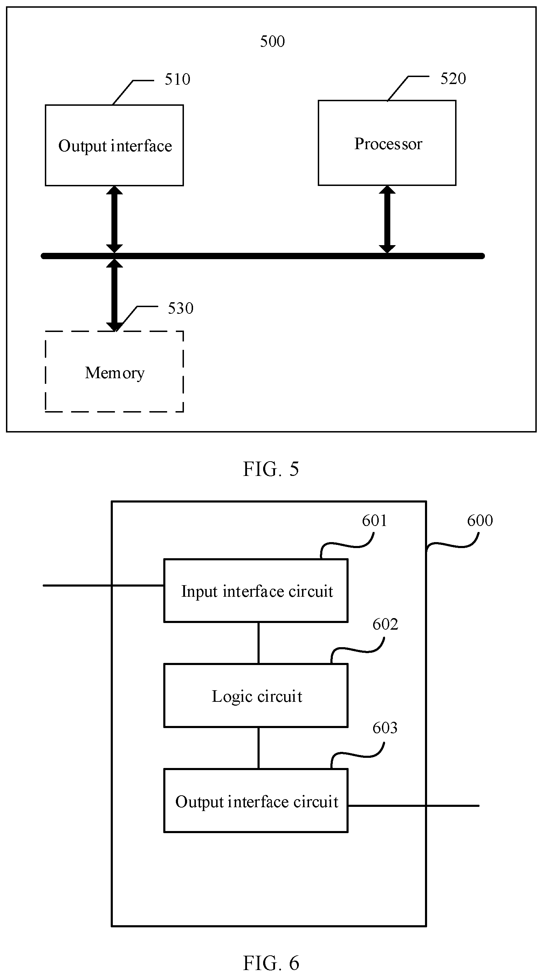

FIG. 5 shows a communication apparatus 500 according to an embodiment of this application. The communication apparatus 500 is configured to implement the channel estimation method provided in this application. The communication apparatus 500 may be a communication apparatus to which the channel estimation method is applied, may be a component in a communication apparatus, or may be an apparatus that can be used in a matching manner with a communication apparatus. The communication apparatus 500 may be a RIS, a network device, or a UE. The communication apparatus 500 may be a chip system or a chip. In this embodiment of this application, the chip system may include a chip, or may include a chip and another discrete component. The communication apparatus 500 includes at least one processor 520, configured to implement the channel estimation method provided in embodiments of this application. The communication apparatus 500 may further include an output interface 510, and the output interface may also be referred to as an input/output interface. In this embodiment of this application, the output interface 510 may be configured to communicate with another apparatus by using a transmission medium, and a function of the output interface 510 may include sending and/or receiving. For example, when the communication apparatus 500 is a chip, the communication apparatus 500 performs transmission with another chip or component through the output interface 510. The processor 520 may be configured to implement the method described in the foregoing method embodiments.

For example, the processor 520 may be configured to perform an action performed by the processing unit 410, and the output interface 510 may be configured to perform an action performed by the communication unit 420. Details are not described again.

Optionally, the communication apparatus 500 may further include at least one memory 530, configured to store program instructions and/or data. The memory 530 is coupled to the processor 520. The coupling in this embodiment of this application may be an indirect coupling or a communication connection between apparatuses, units, or modules in an electrical form, a mechanical form, or another form, and is used for information exchange between the apparatuses, the units, or the modules. The processor 520 may cooperate with the memory 530. The processor 520 may execute the program instructions stored in the memory 530. At least one of the at least one memory may be integrated with the processor.

In this embodiment of this application, the memory 530 may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory is any other medium that can carry or store expected program code in a form of instruction or data structure and that can be accessed by a computer, but is not limited thereto. The memory in this embodiment of this application may alternatively be a circuit or any other apparatus that can implement a storage function, and is configured to store the program instructions and/or the data.

In this embodiment of this application, the processor 520 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

FIG. 6 shows a communication apparatus 600 according to an embodiment of this application. The communication apparatus 600 is configured to implement the channel estimation method provided in this application. The communication apparatus 600 may be a communication apparatus to which the channel estimation method shown in embodiments of this application is applied, or may be a component in a communication apparatus, or may be an apparatus that can be used in a matching manner with a communication apparatus. The communication apparatus 600 may be a RIS, a network device, or a UE. The communication apparatus 600 may be a chip system or a chip. In this embodiment of this application, the chip system may include a chip, or may include a chip and another discrete component. Some or all of the channel estimation methods provided in the foregoing embodiments may be implemented by hardware or may be implemented by software. When implemented by hardware, the communication apparatus 600 may include an input interface circuit 601, a logic circuit 602, and an output interface circuit 603.

Optionally, for example, the apparatus is configured to implement a function of a receiver. The input interface circuit 601 may be configured to perform a receiving action performed by the communication unit 420, the output interface circuit 603 may be configured to perform a sending action performed by the communication unit 420, and the logic circuit 602 may be configured to perform an action performed by the processing unit 410. Details are not described again.

Optionally, during specific implementation, the communication apparatus 600 may be a chip or an integrated circuit.

Some or all of operations and functions performed by the communication apparatus described in the foregoing method embodiments of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. When the computer program product runs on a computer, the computer is enabled to perform the foregoing method embodiments.

An embodiment of this application provides a communication system. Specifically, the communication system may include at least two of a network device, a RIS, or a UE configured to implement the method shown in FIG. 3. For details, refer to the related descriptions in the foregoing method embodiments. Details are not described herein again.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although embodiments of this application are described, a person skilled in the art can make changes and modifications to these embodiments once they learn of a basic inventive concept. Therefore, the appended claims are intended to be construed as including the preferred embodiments and all changes and modifications that fall within the scope of this application.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

**Claims**

1.  A channel estimation method, wherein the method comprises:

    sending $T_1$ reference signals, wherein the $T_1$ reference signals are reflected to a network device through a reconfigurable intelligent surface RIS, $T_1$ is a positive integer less than M, and M is a quantity of unit cells comprised in the RIS;
    receiving first information from the network device, wherein the first information indicates a value of $T_2$, and $T_2$ is a positive integer less than M; and
    sending $T_2$ reference signals, wherein the $T_2$ reference signals are reflected to the network device through the RIS, the $T_2$ reference signals are used to estimate a cascaded channel, and the cascaded channel comprises a channel between the network device and the RIS and a channel between the RIS and the terminal device.

2.  The method according to claim 1, wherein

    a value of $T_1$ is predefined; or
    the method further comprises: receiving second information from the network device, wherein the second information indicates a value of $T_1$ or indicates a value of N, N is a quantity of unit cells comprised in a first subarray of the RIS, the first subarray is used to reflect the $T_1$ reference signals, and $T_1$ is a positive integer greater than or equal to N and less than M.

3. A channel estimation method, wherein the method comprises:

receiving $T_1$ reference signals that are from a terminal device and that are reflected by a first subarray of a RIS, wherein the RIS comprises M unit cells, the first subarray comprises N unit cells in the M unit cells, M is a positive integer, N is a positive integer less than M, and $T_1$ is a positive integer greater than or equal to N;

estimating a path of an angular domain of a cascaded channel based on the $T_1$ reference signals, and determining a first codebook based on the path of the angular domain, wherein the first codebook comprises at least one weight, the at least one weight is weights of E unit cells in the M unit cells, the cascaded channel comprises a channel between a network device and the RIS and a channel between the RIS and the terminal device, and E is a positive integer less than or equal to M;

sending third information to the RIS, wherein the third information indicates the first codebook, and the first codebook is used by the RIS to reflect a reference signal;

receiving $T_2$ reference signals that are from the terminal device and that are reflected by the E unit cells, wherein the $T_2$ reference signals are processed based on the first codebook, and $T_2$ is a positive integer greater than or equal to the path of the angular domain and less than M; and

estimating the cascaded channel based on the $T_2$ reference signals.

4. The method according to claim 3, wherein the first codebook meets the following relationship:

$$W_{Dr} = \left(D_{r_{new}}(:,L) \times D_r(:,L)^{-1}\right)^{\mathrm{H}},$$

wherein

$W_{Dr}$ represents the first codebook, $D_{r_{new}}$ represents a new dictionary matrix that is of the angular domain and that is obtained based on the first codebook, $D_r$ represents an original dictionary matrix of the angular domain, L represents the path of the angular domain, $X^{\mathrm{H}}$ represents a conjugate transpose matrix of a matrix X, and $D(:,L)$ represents taking L column vectors of a matrix D.

5. The method according to claim 4, wherein a dimension of $D_{r_{new}}$ is $T_2 \times R$, and R represents a resolution of the angular domain.

6. The method according to claim 4 or 5, wherein

the first subarray is a linear array, and a dimension of $D_r$ is $N \times R$; or

the first subarray is a planar array, and $D_r = D_{rH} \otimes D_{rV}$, wherein $D_{rH}$ represents a row matrix, $D_{rV}$ represents a column matrix, a dimension of $D_{rH}$ is $p \times R$, a dimension of $D_{rV}$ is $q \times R$, a dimension of the first subarray is $p \times q$, and $a \otimes b$ represents solving for a Kronecker product of a and b; and

R represents the resolution of the angular domain.

7. The method according to any one of claims 3 to 6, wherein the sending third information to the RIS comprises:

sending the first codebook to the RIS; or

sending an index of the path of the angular domain in the original dictionary matrix of the angular domain to the RIS.

8. The method according to any one of claims 3 to 7, wherein the estimating a path of an angular domain of a cascaded channel based on the $T_1$ reference signals comprises:

estimating the path of the angular domain based on the $T_1$ reference signals by using a compressed sensing algorithm.

9. The method according to any one of claims 3 to 8, wherein the method further comprises:

sending fourth information to the RIS, wherein the fourth information comprises one or more of the following: a value of N, a quantity of rows of the N unit cells, or a quantity of columns of the N unit cells.

10. The method according to any one of claims 3 to 9, wherein the N unit cells are continuous unit cells.

11. A channel estimation method, wherein the method comprises:

sending $T_1$ reference signals that are reflected by a first subarray of a RIS to a network device, wherein the RIS comprises M unit cells, the first subarray comprises N unit cells in the M unit cells, M is a positive integer, N is a positive integer less than M, and $T_1$ is a positive integer greater than or equal to N and less than M;

receiving third information from the network device, wherein the third information indicates a first codebook, the first codebook comprises at least one weight, the at least one weight is weights of E unit cells in the M unit cells, the first codebook is determined based on the $T_1$ reference signals, and E is a positive integer less than or equal to M; and

sending $T_2$ reference signals reflected by the E unit cells to the network device, wherein the $T_2$ reference signals are used to estimate a cascaded channel, the $T_2$ reference signals are processed based on the first codebook, $T_2$ is a positive integer greater than or equal to a path of an angular domain of the cascaded channel and less than M, and the cascaded channel comprises a channel between the network device and the RIS and a channel between the RIS and a terminal device.

12. The method according to claim 11, wherein the first codebook meets the following relationship:

$$W_{Dr} = \left( D_{r_{new}}(:, L) \times D_r(:, L)^{-1} \right)^{\mathrm{H}},$$

wherein

$W_{Dr}$ represents the first codebook, $D_{r_{new}}$ represents a new dictionary matrix that is of the angular domain and that is obtained based on the first codebook, $D_r$ represents an original dictionary matrix of the angular domain, L represents the path of the angular domain, $X^{\mathrm{H}}$ represents a conjugate transpose matrix of a matrix X, and $D(:, L)$ represents taking L column vectors of a matrix D.

13. The method according to claim 12, wherein a dimension of $D_{r_{new}}$ is $T_2 \times R$, and R represents a resolution of the angular domain.

14. The method according to claim 12 or 13, wherein

the first subarray is a linear array, a dimension of $D_r$ is $N_{sub} \times R$, and $N_{sub}$ represents a quantity of unit cells comprised in the first subarray; or

the first subarray is a planar array, and $D_r = D_{rH} \otimes D_{rV}$, wherein $D_{rH}$ represents a row matrix, $D_{rV}$ represents a column matrix, a dimension of $D_{rH}$ is $p \times R$, a dimension of $D_{rV}$ is $q \times R$, a dimension of the first subarray is $p \times q$, and $a \otimes b$ represents solving for a Kronecker product of a and b; and

R represents the resolution of the angular domain.

15. The method according to any one of claims 11 to 14, wherein the receiving third information from the network device comprises:

receiving the first codebook from the network device; or

receiving an index that is of the path of the angular domain in the original dictionary matrix of the angular domain and that is from the network device.

16. The method according to any one of claims 11 to 15, wherein the method further comprises:
receiving fourth information from the network device, wherein the fourth information comprises one or more of the following: a value of N, a quantity of rows of the N unit cells, or a quantity of columns of the N unit cells.

17. The method according to any one of claims 11 to 16, wherein the N unit cells are continuous unit cells.

18. A communication apparatus, comprising a processor, wherein the processor is configured to execute one or more computer programs stored in a memory, so that the communication apparatus performs the method according to claim 1 or 2, or the communication apparatus performs the method according to any one of claims 3 to 10, or the communication apparatus performs the method according to any one of claims 11 to 17.

19. The communication apparatus according to claim 18, wherein the communication apparatus further comprises the memory.

20. The communication apparatus according to claim 18 or 19, wherein the communication apparatus is a chip or a chip system.

21. A communication apparatus, comprising a module configured to perform the method according to claim 1 or 2, a module configured to perform the method according to any one of claims 3 to 10, or a module configured to perform the method according to any one of claims 11 to 17.

22. A chip system, wherein the chip system comprises a logic circuit and an input/output interface, the input/output interface is configured to communicate with a communication apparatus other than the chip system, and the logic circuit is configured to perform the method according to claim 1 or 2, or the logic circuit is configured to perform the method according to any one of claims 3 to 10, or the logic circuit is configured to perform the method according to any one of claims 11 to 17.

23. A computer-readable storage medium, wherein the computer-readable storage medium is configured to store a computer program; and when the computer program is run on a computer, the computer is enabled to perform the method according to claim 1 or 2, or the computer is enabled to perform the method according to any one of claims 3 to 10, or the computer is enabled to perform the method according to any one of claims 11 to 17.

24. A computer program product, wherein the computer program product comprises a computer program; and when the computer program is run on a computer, the computer is enabled to perform the method according to claim 1 or 2, or the computer is enabled to perform the method according to any one of claims 3 to 10, or the computer is enabled to perform the method according to any one of claims 11 to 17.

25. A communication system, comprising a communication apparatus configured to perform the method according to claim 1 or 2, a communication apparatus configured to perform the method according to any one of claims 3 to 10, and a communication apparatus configured to perform the method according to any one of claims 11 to 17.

FIG. 1

RIS

Reflect    Incident

Access network device

UE

FIG. 2

| UE | RIS | Access network device |
|---|---|---|

S301: T$_1$ reference signals

S302: Reflect the T$_1$ reference signals by using a first subarray

S303: Estimate a path of an angular domain of a cascaded channel based on the T$_1$ reference signals, and determine a first codebook based on the path of the angular domain

S304: Indicate the first codebook

S305: T$_2$ reference signals

S306: Reflect the T$_2$ reference signals by using E unit cells

S307: Estimate the cascaded channel based on the T$_2$ reference signals

FIG. 3

Communication apparatus 400

Processing unit 410

Communication unit 420

FIG. 4

500

510

Output interface

520

Processor

530

Memory

FIG. 5

601

600

Input interface circuit

602

Logic circuit

603

Output interface circuit

FIG. 6

## INTERNATIONAL SEARCH REPORT

| International application No. |
|---|
| **PCT/CN2022/119624** |

**A. CLASSIFICATION OF SUBJECT MATTER**

H04B7/145(2006.01)i

According to International Patent Classification (IPC) or to both national classification and IPC

**B. FIELDS SEARCHED**

Minimum documentation searched (classification system followed by classification symbols)

IPC: H04B; H04L; H04W

Documentation searched other than minimum documentation to the extent that such documents are included in the fields searched

Electronic data base consulted during the international search (name of data base and, where practicable, search terms used)

CNTXT, ENTXT, ENTXTC, DWPI, 3GPP, IEEE: 可重构智能表面, 智能反射面, 级联信道, 参考信号, 估计, 信号估计, Reconfigurable Intelligent Surface, RIS, Intelligent reflecting surface, IRS, channel, reference signal, estimate

**C. DOCUMENTS CONSIDERED TO BE RELEVANT**

| Category* | Citation of document, with indication, where appropriate, of the relevant passages | Relevant to claim No. |
|---|---|---|
| A | US 2022077919 A1 (QUALCOMM IINC.) 10 March 2022 (2022-03-10)<br>description, paragraphs 61-62 and 93-124 | 1-25 |
| A | CN 114257475 A (SONY CORPORATION) 29 March 2022 (2022-03-29)<br>entire document | 1-25 |
| A | CN 114079596 A (HUAWEI TECHNOLOGIES CO., LTD.) 22 February 2022 (2022-02-22)<br>entire document | 1-25 |
| A | US 2022014935 A1 (HUAWEI TECHNOLOGIES CO., LTD.) 13 January 2022 (2022-01-13)<br>entire document | 1-25 |
| A | KHALEEL,Aymen et al. "Reconfigurable Intelligent Surface-Empowered MIMO Systems"<br>*IEEE SYSTEMS JOURNAL*, Vol. 15, No. 3, 30 September 2021 (2021-09-30),<br>entire document | 1-25 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 April 2023** | **23 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2022/119624**

| Patent document cited in search report | | | Publication date (day/month/year) | Patent family member(s) | | | Publication date (day/month/year) |
|---|---|---|---|---|---|---|---|
| US | 2022077919 | A1 | 10 March 2022 | WO | 2022055943 | A1 | 17 March 2022 |
| CN | 114257475 | A | 29 March 2022 | WO | 2022057918 | A1 | 24 March 2022 |
| CN | 114079596 | A | 22 February 2022 | | None | | |
| US | 2022014935 | A1 | 13 January 2022 | WO | 2022007417 | A1 | 13 January 2022 |
| | | | | CN | 115804180 | A | 14 March 2023 |

Form PCT/ISA/210 (patent family annex) (July 2022)